# EUROPEAN PATENT SPECIFICATION

(11) **EP 4 662 632 B1**
(45) Date of publication and mention of the grant of the patent: **14.10.2026**
(21) Application number: 24711046.3
(22) Date of filing: 06.02.2024
(51) Int. Cl.: G06T 5/20, G06T 5/70, G06T 5/73, G06T 5/94

(54) **IMAGE LOCAL CONTRAST ENHANCEMENT SYSTEMS AND METHODS**
SYSTEME UND VERFAHREN ZUR LOKALEN BILDKONTRASTVERSTÄRKUNG
SYSTÈMES ET PROCÉDÉS D'AMÉLIORATION DE CONTRASTE LOCAL D'IMAGE

(30) Priority: 06.02.2023 US 202363483518 P
(43) Date of publication of application: 17.12.2025
(73) Proprietor: Teledyne FLIR Commercial Systems, Inc., Goleta, CA 93117 (US)
(72) Inventor: HENSLEY, Brenna, Goleta, California 93117 (US); LIN, Stephanie, Goleta, California 93117 (US)
(74) Representative: Murgitroyd & Company
(86) International application number: PCT/US2024/014594
(87) International publication number: WO 2024/167905

(56) References cited:
- WO-A1-2016/022374
- US-A1- 2012 281 891
- US-A1- 2016 155 216
- US-A1- 2021 042 893
- US-B1- 8 400 461

## Description

### TECHNICAL FIELD

The present invention relates generally to image processing and, more particularly, to techniques for improving images for viewing.

### BACKGROUND

Various types of imaging devices are used to capture images (e.g., image frames) in response to electromagnetic radiation received from scenes of interest. Typically, these imaging devices include sensors arranged in a plurality of rows and columns, with each sensor providing a corresponding pixel of a captured image, and each pixel having an associated pixel value corresponding to the received electromagnetic radiation.

Images often include scene content that corresponds to a limited range of pixel values. If different features of a scene (e.g., various foreground and/or background features) include pixel values that are close to each other, the different features may be difficult to distinguish from each other. This can be particularly problematic when the bit depth of an image is reduced after capture.

Various techniques exist for increasing local contrast to distinguish among such different features in images. However, conventional local contrast enhancement techniques may cause processed images to exhibit significant artifacts. In particular, processed images may lack temporal coherence. For example, when successive processed images are viewed, artifacts such as blocky flashing light and darkening effects may be evident where an object having high pixel values (e.g., a hot object in a thermal image) moves across the successive images (e.g., also referred to as motion sickness).
WO 2016/022374 discloses a method for edge enhancement of a digital image representing data from an infrared sensor comprising using at least two signal processing paths to adjust a display-formatted pixel value to enhance the appearance of edges in displayed image data. A digital image can be filtered by producing an edge enhancement factor, a, per pixel from at least one look up table. Digital image data can also be adjusted using at least two signal processing paths, where the image data is adjusted if a pixel value and its neighboring pixel values are all within a smoothing range or where the pixel delta value is outside of a bad pixel range and its neighboring pixel delta values are all within the bad pixel range. **In** such cases, the image data can be adjusted by replacing the pixel value with an average or median value of the neighboring pixels.

US 2021/042893 discloses an imaging system including at least one camera, a display, and a controller. The controller includes at least one processor and a memory. The controller is configured to carry out operations. The operations include receiving at least one image from the at least one camera. The operations additionally include adjusting the at least one image to provide at least one adjusted image. Adjusting the at least one image includes applying: a local adaptive histogram equalization filter, a global gamma correction filter, and a local contrast filter. The operations also include outputting the at least one adjusted image to the display.

### SUMMARY

**In** accordance with embodiments disclosed herein, various techniques are provided to improve local contrast in images. In some embodiments, a multi-stage process may be applied to captured images including a local contrast enhancement stage, a sharpening stage, and an equalization stage. In some embodiments, such a process can provide images suitable for human viewing (e.g., for 14-bit or 16-bit infrared images converted to 8-bit images for human viewing) that improve over conventional local tone mapping techniques.

According to a first aspect of the present invention, there is provided a method according to claim 1.

According to a second aspect, there is provided a system according to claim 8.

The scope of the invention is defined by the claims. A more complete understanding of embodiments of the present invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Fig. 1 illustrates a block diagram of an imaging system in accordance with an embodiment of the disclosure.
Fig. 2 illustrates a block diagram of an image capture component in accordance with an embodiment of the disclosure.
Fig. 3 illustrates a process of performing local contrast enhancement and other image processing in accordance with an embodiment of the present disclosure.
Fig. 4 illustrates a process of filtering pixel values in accordance with an embodiment of the present disclosure.
Fig. 5 illustrates a subset of summed pixel values of an image in accordance with an embodiment of the present disclosure.
Fig. 6 illustrates a kernel and a selected pixel for filtering in accordance with an embodiment of the present disclosure.
Figs. 7 to 10 illustrate techniques for filtering a selected pixel using sets of summed pixel values in accordance with embodiments of the present disclosure.
Fig. 11 illustrates a representation of a buffer size used for filtering pixels in accordance with an embodiment of the present disclosure.
Fig. 12 illustrates a representation of stacked filters used for filtering pixels in accordance with an embodiment of the present disclosure.

Embodiments of the present invention and their advantages are best understood by referring to the detailed description that follows. It should be appreciated that like reference numerals are used to identify like elements illustrated in one or more of the figures.

### DETAILED DESCRIPTION

In accordance with embodiments disclosed herein, various techniques are provided to improve local contrast in images using a multi-stage process applied to captured images, such as thermal images. Although a particular ordering of the stages is described below, any desired ordering may be used in various implementations.

In some embodiments, a local contrast enhancement stage includes a low pass filter followed by a gain stage. In some embodiments, the low pass filter may be implemented with stacked (e.g., sequential) box filters to effectively provide triangle filtering using less hardware resources than would otherwise be required using a single larger filter. High frequency image content is also obtained (e.g., by subtracting an original image from a low pass filtered image), amplified (e.g., gain is applied), and added to the low pass filtered image to provide a local contrast enhanced image. Such an approach can provide a sequence of local contrast enhanced images that preserve temporal coherence that is often lacking in conventional local contrast enhancement techniques.

In some embodiments, a sharpening stage includes one or more sharpening filters (e.g., bilateral filter, guided filter, unsharp mask, and/or other filters) applied to the local contrast enhanced images. In this regard, the enhanced images may be low pass and high pass filtered (e.g., using different low pass and high pass filters than the local contrast enhancement stage) and the high pass filtered enhanced images may be amplified to provide sharpening.

The equalization stage includes applying a histogram equalization on the low pass filtered enhanced images. The equalized low pass filtered enhanced images may then be scaled down to a lower bit resolution (e.g., down to 8 bits) and added to the amplified high pass filtered enhanced images to provide output images. Additional details are further discussed herein.

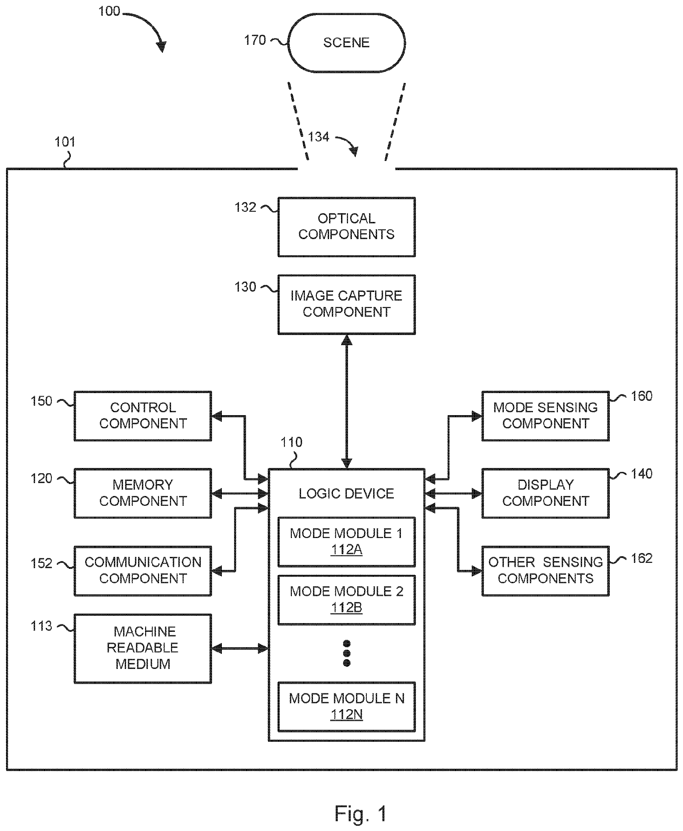

Fig. 1 illustrates a block diagram of an imaging system 100 in accordance with an embodiment of the disclosure. Imaging system 100 may be used to capture and process images in accordance with various techniques described herein. In one embodiment, various components of imaging system 100 may be provided in a housing 101, such as a housing of a camera, a personal electronic device (e.g., a mobile phone), or other system. In another embodiment, one or more components of imaging system 100 may be implemented remotely from each other in a distributed fashion (e.g., networked or otherwise).

In one embodiment, imaging system 100 includes a logic device 110, a memory component 120, an image capture component 130, optical components 132 (e.g., one or more lenses configured to receive electromagnetic radiation through an aperture 134 in housing 101 and pass the electromagnetic radiation to image capture component 130), a display component 140, a control component 150, a communication component 152, a mode sensing component 160, and a sensing component 162.

In various embodiments, imaging system 100 may implemented as an imaging device, such as a camera, to capture images, for example, of a scene 170 (e.g., a field of view). Imaging system 100 may represent any type of camera system which, for example, detects electromagnetic radiation (e.g., irradiance) and provides representative data (e.g., one or more still images or video images). For example, imaging system 100 may represent a camera that is directed to detect one or more ranges (e.g., wavebands) of electromagnetic radiation and provide associated image data. Imaging system 100 may include a portable device and may be implemented, for example, as a handheld device and/or coupled, in other examples, to various types of vehicles (e.g., a land-based vehicle, a watercraft, an aircraft, a spacecraft, or other vehicle) or to various types of fixed locations (e.g., a home security mount, a campsite or outdoors mount, or other location) via one or more types of mounts. In still another example, imaging system 100 may be integrated as part of a non-mobile installation to provide images to be stored and/or displayed.

Logic device 110 may include, for example, a microprocessor, a single-core processor, a multi-core processor, a microcontroller, a programmable logic device (e.g., a field programmable logic device (FPGA)), and/or other device configured to perform processing operations, a digital signal processing (DSP) device, one or more memories for storing executable instructions (e.g., software, firmware, or other instructions), and/or or any other appropriate combination of processing device and/or memory to execute instructions to perform any of the various operations described herein. Logic device 110 is adapted to interface and communicate with components 120, 130, 140, 150, 160, and 162 to perform method and processing steps as described herein. Logic device 110 may include one or more mode modules 112A-112N for operating in one or more modes of operation (e.g., to operate in accordance with any of the various embodiments disclosed herein). In one embodiment, mode modules 112A-112N are adapted to define processing and/or display operations that may be embedded in logic device 110 or stored on memory component 120 for access and execution by logic device 110. In another aspect, logic device 110 may be adapted to perform various types of image processing techniques as described herein.

In various embodiments, it should be appreciated that each mode module 112A-112N may be integrated in software and/or hardware as part of logic device 110, or code (e.g., software or configuration data) for each mode of operation associated with each mode module 112A-112N, which may be stored in memory component 120. Embodiments of mode modules 112A-112N (i.e., modes of operation) disclosed herein may be stored by a machine readable medium 113 in a non-transitory manner (e.g., a memory, a hard drive, a compact disk, a digital video disk, or a flash memory) to be executed by a computer (e.g., logic or processor-based system) to perform various methods disclosed herein.

In various embodiments, the machine readable medium 113 may be included as part of imaging system 100 and/or separate from imaging system 100, with stored mode modules 112A-112N provided to imaging system 100 by coupling the machine readable medium 113 to imaging system 100 and/or by imaging system 100 downloading (e.g., via a wired or wireless link) the mode modules 112A-112N from the machine readable medium (e.g., containing the non-transitory information). In various embodiments, as described herein, mode modules 112A-112N provide for improved camera processing techniques for real time applications, wherein a user or operator may change the mode of operation depending on a particular application, such as an off-road application, a maritime application, an aircraft application, a space application, or other application.

Memory component 120 includes, in one embodiment, one or more memory devices (e.g., one or more memories) to store data and information. The one or more memory devices may include various types of memory including volatile and non-volatile memory devices, such as RAM (Random Access Memory), ROM (Read-Only Memory), EEPROM (Electrically-Erasable Read-Only Memory), flash memory, or other types of memory. In one embodiment, logic device 110 is adapted to execute software stored in memory component 120 and/or machine-readable medium 113 to perform various methods, processes, and modes of operations in manner as described herein.

Image capture component 130 includes, in one embodiment, one or more sensors (e.g., any type of visible light, infrared, or other type of detector, including a detector implemented as part of a focal plane array) for capturing image signals representative of an image of scene 170. In one embodiment, the sensors of image capture component 130 provide for representing (e.g., converting) a captured thermal image signal of scene 170 as digital data (e.g., via an analog-to-digital converter included as part of the sensor or separate from the sensor as part of imaging system 100).

Logic device 110 may be adapted to receive image signals from image capture component 130, process image signals (e.g., to provide processed image data), store image signals or image data in memory component 120, and/or retrieve stored image signals from memory component 120. Logic device 110 may be adapted to process image signals stored in memory component 120 to provide image data (e.g., captured and/or processed image data) to display component 140 for viewing by a user.

Display component 140 includes, in one embodiment, an image display device (e.g., a liquid crystal display (LCD)) or various other types of generally known video displays or monitors. Logic device 110 may be adapted to display image data and information on display component 140. Logic device 110 may be adapted to retrieve image data and information from memory component 120 and display any retrieved image data and information on display component 140. Display component 140 may include display electronics, which may be utilized by logic device 110 to display image data and information. Display component 140 may receive image data and information directly from image capture component 130 via logic device 110, or the image data and information may be transferred from memory component 120 via logic device 110.

In one embodiment, logic device 110 may initially process a captured thermal image and present a processed image in one mode, corresponding to mode modules 112A-112N, and then upon user input to control component 150, logic device 110 may switch the current mode to a different mode for viewing the processed image on display component 140 in the different mode. This switching may be referred to as applying the camera processing techniques of mode modules 112A-112N for real time applications, wherein a user or operator may change the mode while viewing an image on display component 140 based on user input to control component 150. In various aspects, display component 140 may be remotely positioned, and logic device 110 may be adapted to remotely display image data and information on display component 140 via wired or wireless communication with display component 140, as described herein.

Control component 150 includes, in one embodiment, a user input and/or interface device having one or more user actuated components, such as one or more push buttons, slide bars, rotatable knobs or a keyboard, that are adapted to generate one or more user actuated input control signals. Control component 150 may be adapted to be integrated as part of display component 140 to operate as both a user input device and a display device, such as, for example, a touch screen device adapted to receive input signals from a user touching different parts of the display screen. Logic device 110 may be adapted to sense control input signals from control component 150 and respond to any sensed control input signals received therefrom.

Control component 150 may include, in one embodiment, a control panel unit (e.g., a wired or wireless handheld control unit) having one or more user-activated mechanisms (e.g., buttons, knobs, sliders, or others) adapted to interface with a user and receive user input control signals. In various embodiments, the one or more user-activated mechanisms of the control panel unit may be utilized to select between the various modes of operation, as described herein in reference to mode modules 112A-112N. In other embodiments, it should be appreciated that the control panel unit may be adapted to include one or more other user-activated mechanisms to provide various other control operations of imaging system 100, such as auto-focus, menu enable and selection, field of view (FoV), brightness, contrast, gain, offset, spatial, temporal, and/or various other features and/or parameters. In still other embodiments, a variable gain signal may be adjusted by the user or operator based on a selected mode of operation.

In another embodiment, control component 150 may include a graphical user interface (GUI), which may be integrated as part of display component 140 (e.g., a user actuated touch screen), having one or more images of the user-activated mechanisms (e.g., buttons, knobs, sliders, or others), which are adapted to interface with a user and receive user input control signals via the display component 140. As an example for one or more embodiments as discussed further herein, display component 140 and control component 150 may represent appropriate portions of a smart phone, a tablet, a personal digital assistant (e.g., a wireless, mobile device), a laptop computer, a desktop computer, or other type of device.

Mode sensing component 160 includes, in one embodiment, an application sensor adapted to automatically sense a mode of operation, depending on the sensed application (e.g., intended use or implementation), and provide related information to logic device 110. In various embodiments, the application sensor may include a mechanical triggering mechanism (e.g., a clamp, clip, hook, switch, push-button, or others), an electronic triggering mechanism (e.g., an electronic switch, push-button, electrical signal, electrical connection, or others), an electro-mechanical triggering mechanism, an electro-magnetic triggering mechanism, or some combination thereof. For example for one or more embodiments, mode sensing component 160 senses a mode of operation corresponding to the imaging system's 100 intended application based on the type of mount (e.g., accessory or fixture) to which a user has coupled the imaging system 100 (e.g., image capture component 130). Alternatively, the mode of operation may be provided via control component 150 by a user of imaging system 100 (e.g., wirelessly via display component 140 having a touch screen or other user input representing control component 150).

Furthermore in accordance with one or more embodiments, a default mode of operation may be provided, such as for example when mode sensing component 160 does not sense a particular mode of operation (e.g., no mount sensed or user selection provided). For example, imaging system 100 may be used in a freeform mode (e.g., handheld with no mount) and the default mode of operation may be set to handheld operation, with the images provided wirelessly to a wireless display (e.g., another handheld device with a display, such as a smart phone, or to a vehicle's display).

Mode sensing component 160, in one embodiment, may include a mechanical locking mechanism adapted to secure the imaging system 100 to a vehicle or part thereof and may include a sensor adapted to provide a sensing signal to logic device 110 when the imaging system 100 is mounted and/or secured to the vehicle. Mode sensing component 160, in one embodiment, may be adapted to receive an electrical signal and/or sense an electrical connection type and/or mechanical mount type and provide a sensing signal to logic device 110. Alternatively or in addition, as discussed herein for one or more embodiments, a user may provide a user input via control component 150 (e.g., a wireless touch screen of display component 140) to designate the desired mode (e.g., application) of imaging system 100.

Logic device 110 may be adapted to communicate with mode sensing component 160 (e.g., by receiving sensor information from mode sensing component 160) and image capture component 130 (e.g., by receiving data and information from image capture component 130 and providing and/or receiving command, control, and/or other information to and/or from other components of imaging system 100).

In various embodiments, mode sensing component 160 may be adapted to provide data and information relating to system applications including a handheld implementation and/or coupling implementation associated with various types of vehicles (e.g., a land-based vehicle, a watercraft, an aircraft, a spacecraft, or other vehicle) or stationary applications (e.g., a fixed location, such as on a structure). In one embodiment, mode sensing component 160 may include communication devices that relay information to logic device 110 via wireless communication. For example, mode sensing component 160 may be adapted to receive and/or provide information through a satellite, through a local broadcast transmission (e.g., radio frequency), through a mobile or cellular network and/or through information beacons in an infrastructure (e.g., a transportation or highway information beacon infrastructure) or various other wired or wireless techniques (e.g., using various local area or wide area wireless standards).

In another embodiment, imaging system 100 may include one or more other types of sensing components 162, including environmental and/or operational sensors, depending on the sensed application or implementation, which provide information to logic device 110 (e.g., by receiving sensor information from each sensing component 162). In various embodiments, other sensing components 162 may be adapted to provide data and information related to environmental conditions, such as internal and/or external temperature conditions, lighting conditions (e.g., day, night, dusk, and/or dawn), humidity levels, specific weather conditions (e.g., sun, rain, and/or snow), distance (e.g., laser rangefinder), and/or whether a tunnel, a covered parking garage, or that some type of enclosure has been entered or exited. Accordingly, other sensing components 160 may include one or more conventional sensors as would be known by those skilled in the art for monitoring various conditions (e.g., environmental conditions) that may have an effect (e.g., on the image appearance) on the data provided by image capture component 130.

In some embodiments, other sensing components 162 may include devices that relay information to logic device 110 via wireless communication. For example, each sensing component 162 may be adapted to receive information from a satellite, through a local broadcast (e.g., radio frequency) transmission, through a mobile or cellular network and/or through information beacons in an infrastructure (e.g., a transportation or highway information beacon infrastructure) or various other wired or wireless techniques. In some embodiments, other sensing components 162 may include one or more motion sensors (e.g., accelerometers, gyroscopes, micro-electromechanical system (MEMS) devices, and/or others as appropriate).

In various embodiments, components of imaging system 100 may be combined and/or implemented or not, as desired or depending on application requirements, with imaging system 100 representing various operational blocks of a system. For example, logic device 110 may be combined with memory component 120, image capture component 130, display component 140, and/or mode sensing component 160. In another example, logic device 110 may be combined with image capture component 130 with only certain operations of logic device 110 performed by circuitry (e.g., a processor, a microprocessor, a microcontroller, a logic device, or other circuitry) within image capture component 130. In still another example, control component 150 may be combined with one or more other components or be remotely connected to at least one other component, such as logic device 110, via a wired or wireless control device so as to provide control signals thereto.

In some embodiments, communication component 152 may be implemented as a network interface component (NIC) adapted for communication with a network including other devices in the network. In various embodiments, communication component 152 may include a wireless communication component, such as a wireless local area network (WLAN) component based on the IEEE 802.11 standards, a wireless broadband component, mobile cellular component, a wireless satellite component, or various other types of wireless communication components including radio frequency (RF), microwave frequency (MWF), and/or infrared frequency (IRF) components adapted for communication with a network. As such, communication component 152 may include an antenna coupled thereto for wireless communication purposes. In other embodiments, the communication component 152 may be adapted to interface with a DSL (e.g., Digital Subscriber Line) modem, a PSTN (Public Switched Telephone Network) modem, an Ethernet device, and/or various other types of wired and/or wireless network communication devices adapted for communication with a network.

In various embodiments, a network may be implemented as a single network or a combination of multiple networks. For example, in various embodiments, the network may include the Internet and/or one or more intranets, landline networks, wireless networks, and/or other appropriate types of communication networks. In another example, the network may include a wireless telecommunications network (e.g., cellular phone network) adapted to communicate with other communication networks, such as the Internet. As such, in various embodiments, the imaging system 100 may be associated with a particular network link such as for example a URL (Uniform Resource Locator), an IP (Internet Protocol) address, and/or a mobile phone number.

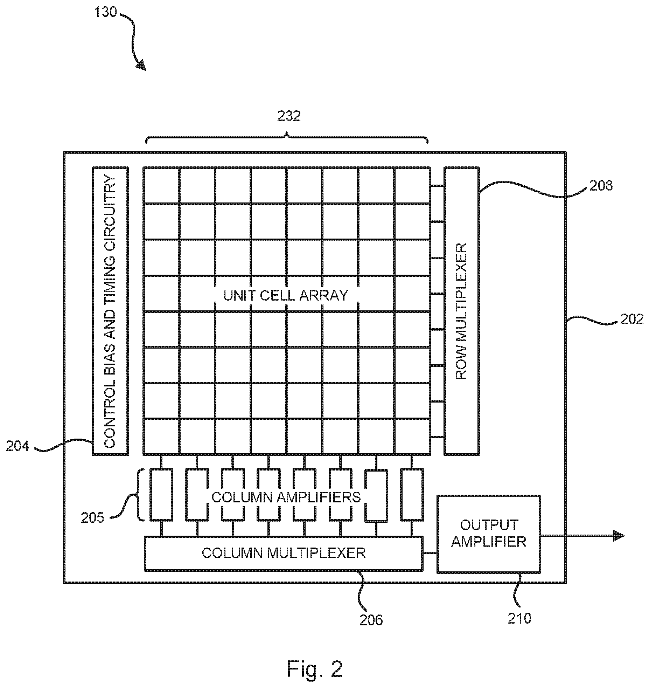

Fig. 2 illustrates a block diagram of image capture component 130 in accordance with an embodiment of the disclosure. In this illustrated embodiment, image capture component 130 is a thermal imager implemented as a focal plane array (FPA) including an array of unit cells 232 and a read out integrated circuit (ROIC) 202. Each unit cell 232 may be provided with an infrared detector (e.g., a microbolometer or other appropriate sensor) and associated circuitry to provide image data for a pixel of a captured thermal image. In this regard, timemultiplexed electrical signals may be provided by the unit cells 232 to ROIC 202.

ROIC 202 includes bias generation and timing control circuitry 204, column amplifiers 205, a column multiplexer 206, a row multiplexer 208, and an output amplifier 210. Images captured by infrared sensors of the unit cells 232 may be provided by output amplifier 210 to logic device 110 and/or any other appropriate components to perform various processing techniques described herein. Although an 8 by 8 array is shown in Fig. 2, any desired array configuration may be used in other embodiments. Further descriptions of ROICs and infrared sensors (e.g., microbolometer circuits) may be found in U.S. Patent No. 6,028,309 issued February 22, 2000.

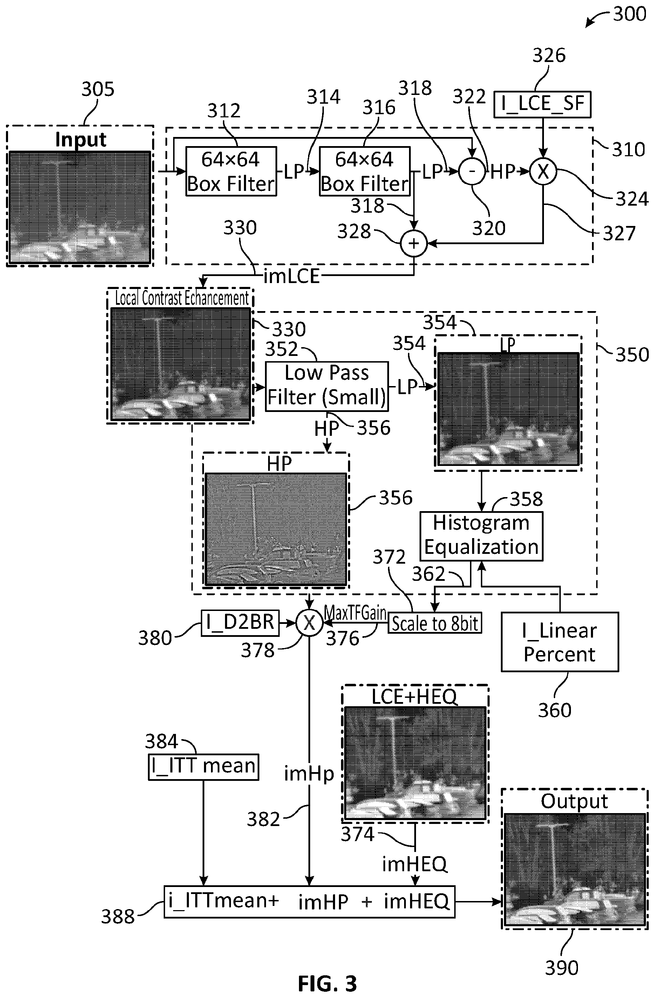

Fig. 3 illustrates a process 300 of performing local contrast enhancement and other image processing in accordance with an embodiment of the present disclosure. In some embodiments, process 300 may be performed by logic device 110 of imaging system 100, such as an image processing pipeline provided by logic device 110. Although the blocks of process 300 are illustrated in a particular order, this arrangement is not limiting. Any of the various blocks of process 300 may be reordered, omitted, and/or otherwise modified as appropriate in particular implementations (e.g., to reduce the processing resources of logic device 110 utilized to perform process 300). In various embodiments and discussed herein, process 300 may contain various stages, for example, a local contrast enhancement stage, a sharpening stage, an equalization stage, and/or others as appropriate.

An original image 305 is received by block 310 for processing. For example, original image 305 may be an image (e.g., raw or pre-processed thermal image or other types of images) of scene 170 captured by image capture component 130. Block 310 is a local contrast enhancement stage and performs box filtering and high frequency content gain adjustment as further discussed herein.

Blocks 312 and 316 are two low pass filters (e.g., implemented as box filters, also referred to as moving average filters) configured in a stacked (e.g., serial) manner. Block 312 receives original image 305 and applies a first low pass filter to provide a first low pass filtered image 314. Block 316 receives first low pass filtered image 314 and applies a second low pass filter to provide a second low pass filtered image 318.

Block 320 provides a high pass filtered image 322, for example, by calculating a difference between original image 305 and second low pass filtered image 318 as shown. In block 324, high pass filtered image 322 is multiplied (e.g., amplified) by a gain value 326 to provide a boosted high pass filtered image 327. In block 328, second low pass filtered image 318 and boosted high pass filtered image 327 are added (e.g., combined) to provide a local contrast enhanced image 330. Thus, it will be appreciated that high frequency image content of original image 305 may be more clearly observed and prominent in enhanced image 330.

Further details of low pass filter blocks 312 and 316 will now be discussed. In some embodiments, the use of two small low pass filter blocks 312 and 316 in a serial configuration instead of a single low pass filter provides various advantages. For example, the small size of filter blocks 312 (e.g., each having a kernel size of 64 pixels by 64 pixels corresponding to approximately 5 percent of a total image size 1024 pixels by 1280 pixels, for example) utilizes less hardware resources (e.g., less processing resources) of logic device 110 than one large filter block (e.g., having a kernel size of 128 pixels by 128 pixels corresponding to approximately 10 percent of a total image size 1024 pixels by 1280 pixels, for example).

In addition, the serial configuration of two small low pass filter blocks 312 and 316 effectively provides a triangle filter with a softer (e.g., more gradual) roll off than would be otherwise available from a single large filter block. As a result, the high pass filtered image 322 generated from two small low pass filter blocks 312 and 316 which is amplified by block 324 to provide an improved local contrast enhanced image 330 and may include more low frequency content than would be present using a 7 pixel by 7 pixel kernel.

The serial configuration of two small low pass filter blocks 312 and 316 also provides improved temporal coherence over conventional local area contrast processing techniques. In particular, when successive original images 306 are processed using local contrast enhancement stage block 310, artifacts such as blocky flashing light and darkening effects may be reduced where an object having high pixel values (e.g., a hot object in a thermal image) moves across the successive images.

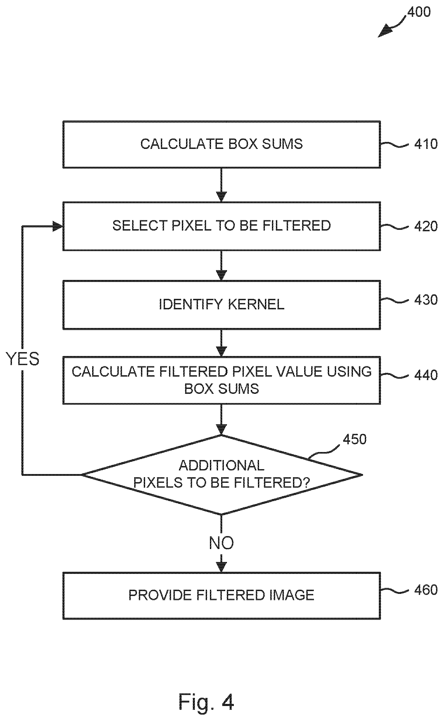

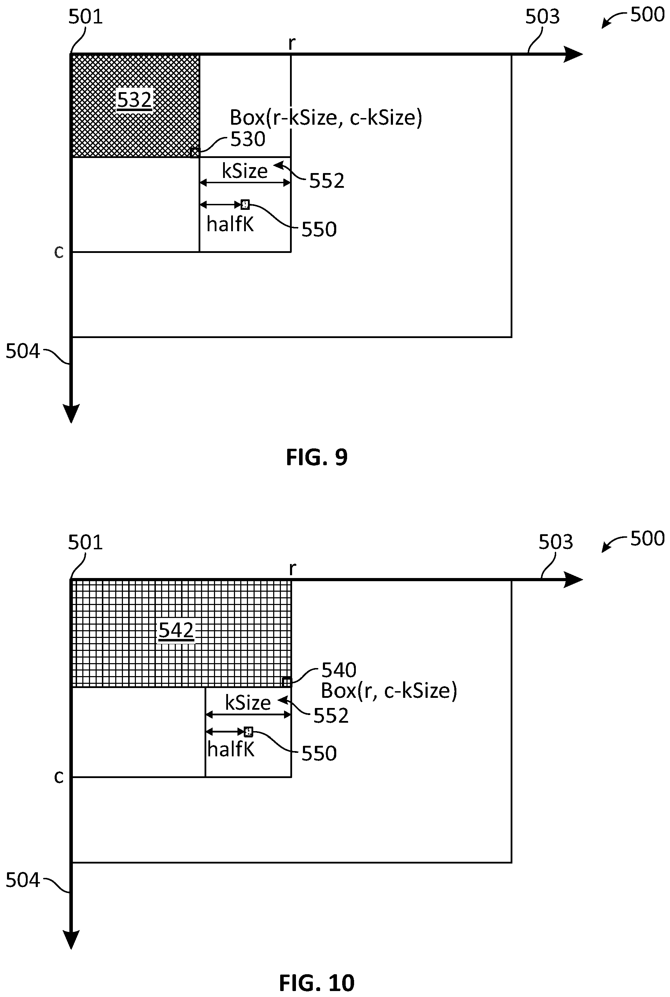

Figs. 4 to 12 will now be discussed to further explain the operation of low pass filter blocks 312 and 316.

Fig. 4 illustrates a process 400 of filtering pixel values in accordance with an embodiment of the present disclosure. For example, process 400 may be performed by logic device 110 in each of blocks 312 and 316 of process 300.

In block 410, logic device 110 calculates sums of a plurality of pixel values in a received image (e.g., pixel values of original image 305 in block 312 or pixel values of first low pass filtered image 314 in block 316) as further discussed herein. In some embodiments, this is also referred to as a box calculation as set forth in the following Equation 1: $Box \left(r, c\right) = {\sum }_{r ′ = 1}^{r} {\sum }_{c ′ = 1}^{c} im \left(r′,c′\right)$ (equation 1)

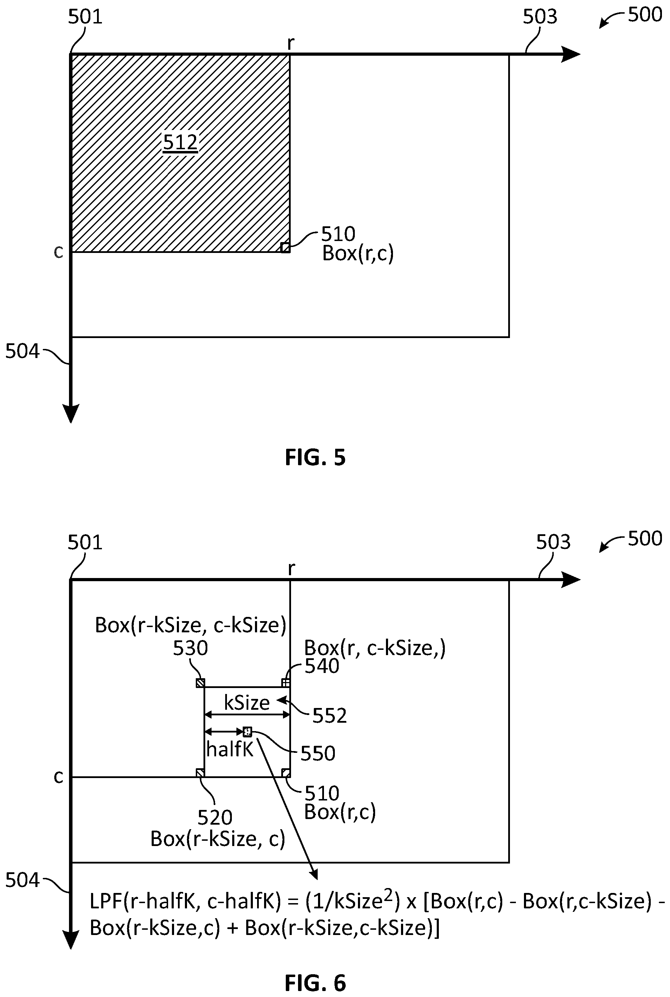

Equation 1 can be further understood with reference to Fig. 5 that illustrates a subset of summed pixel values of an image 500 in accordance with an embodiment of the present disclosure. In Fig. 5, image 500 is shown with a box 512 identifying a set of pixels filling a right-angled parallelogram (e.g., a rectangle or square) with opposite corners corresponding to an origin 501 and a pixel 510 denoted (r, c).

In this regard, r refers to a distance along an axis 503 and c refers to a distance along an axis 504. Thus, pixel 510 refers to a particular pixel (r, c) of image 500 as measured from origin 501 corresponding to the opposite corner of box 512.

In equation 1, pixel (r', c') refers to any pixel within box 512 (e.g., extending from origin 501 to r along axis 503, and extending from the origin to c along axis 504). Also in equation 1, im(r', c') refers to the pixel value of image 500 corresponding to pixel (r', c'). Thus, applying equation 1 to box 512 provides a sum of the subset of pixel values corresponding to all pixels within box 512.

Equation 1 may be separately applied to every pixel of image 500 to provide a plurality of such sums. Accordingly, each pixel of image 500 may have its own associated box (e.g., extending from the origin to the pixel) and corresponding sum (e.g., the sum Box provided by equation 1 as applied to the associated box). For example, applying equation 1 to an image having 1024 by 1280 pixels provides 1024*1280 = 1,310,720 sums (e.g., one sum for each pixel). These sums may be conveniently used to calculate the sums of other portions of image 500 and average kernel values of an image to perform low pass filtering as further discussed herein.

Returning to Fig. 4, in block 420, logic device 110 selects a pixel of image 500 for filtering. In block 430, logic device 110 identifies a kernel associated with the pixel for use in performing filtering.

For example, Fig. 6 further illustrates image 500 with a pixel 550 (r-halfK, c-halfK) identified for filtering within a kernel 552 (e.g., a surrounding neighborhood of pixels). In Fig. 6, kernel 552 has a size (e.g., kSize) of 64 pixels wide by 64 pixels high, however other kernel sizes may be used as appropriate. As shown, pixel 550 is centered within kernel 552 and offset from the edge of kernel 552 by half the size (e.g., halfK) of kernel 552.

Returning to Fig. 4, in block 440, logic device 110 calculates a filtered pixel value for pixel 550 using the box sums determined in block 410. This can be further understood with reference to Figs. 6 to 10.

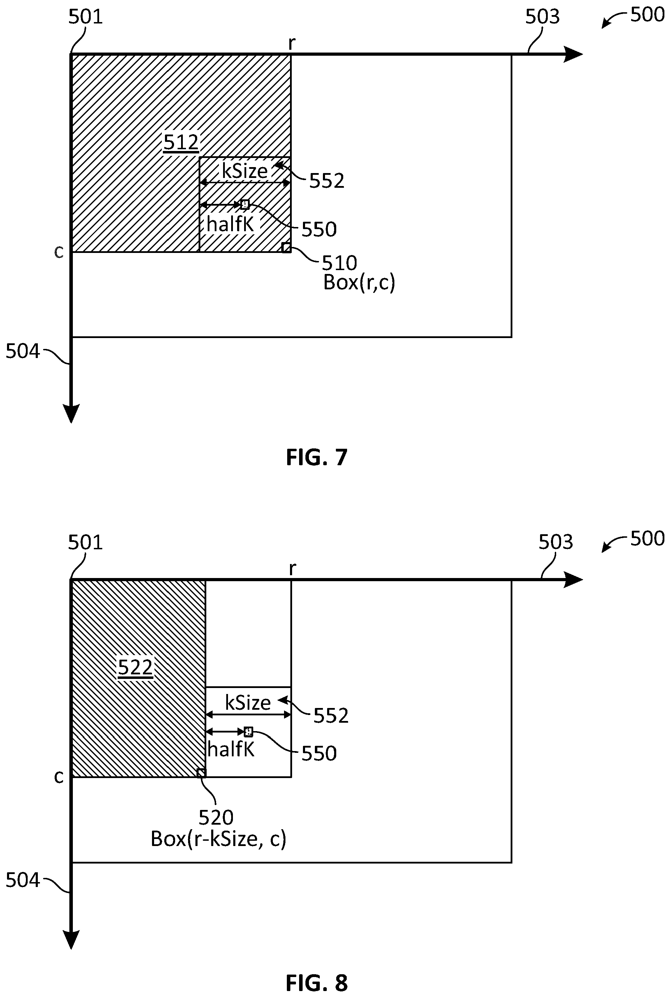

As shown, kernel 552 has corners corresponding to pixel 510 (r, c), 520 (r-kSize,c), 530 (r-kSize,c-kSize), and 540 (r,c-kSize). As further shown in Figs. 7, 8, 9, and 10, each of pixels 510, 520, 530, and 540 has an associated box 512, 522, 532, and 542, respectively.

For example, as discussed, box 512 is a set of pixels filling a right-angled parallelogram with opposite corners corresponding to origin 501 and pixel 510 (r, c). Similarly, box 522 is a set of pixels filling a right-angled parallelogram with opposite corners corresponding to origin 501 and pixel 520 (r-kSize,c). Box 532 is a set of pixels filling a right-angled parallelogram with opposite corners corresponding to origin 501 and pixel 530 (r-kSize,c-kSize). Box 542 is a set of pixels filling a right-angled parallelogram with opposite corners corresponding to origin 501 and pixel 540 (r,c-kSize).

It will be appreciated that equation 1 was applied to each of pixels 510, 520, 530, and 540 in block 410. As a result, sums of the pixel values corresponding to the pixels within boxes 512, 522, 532, and 542 will be available. Upon review of Figs. 7 to 10, it will be appreciated that the sum of pixel values within kernel 552 may be determined using the sums of boxes 512, 522, 532, and 542 in accordance with the following equation 2: $Kernel Sum = \left[Box\left(r, c\right)-Box\left(r,c-kSize\right)-Box\left(r-kSize,c\right)+Box\left(r-kSize,c-kSize\right)\right]$ (equation 2)

As a result, an average of the pixel values of kernel 552 may be determined by the following equation 3: $Kernel Average = \left(1/{kSize}^{2}\right) \times \left(Kernel Sum\right)$ (equation 3)

This Kernel Average effectively provides a low pass filtered pixel value for pixel 550 as further represented by the following equation 4: 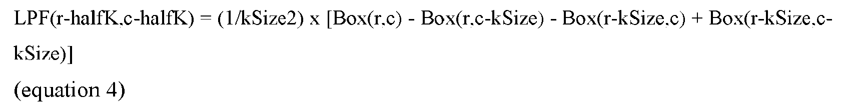 LPF(r-halfK,c-halfK) = (1/kSize2) x [Box(r.c) - Box(r.c-kSize) - Box(r-kSize.c) + Box(r-kSize.c-kSize)] (equation 4)

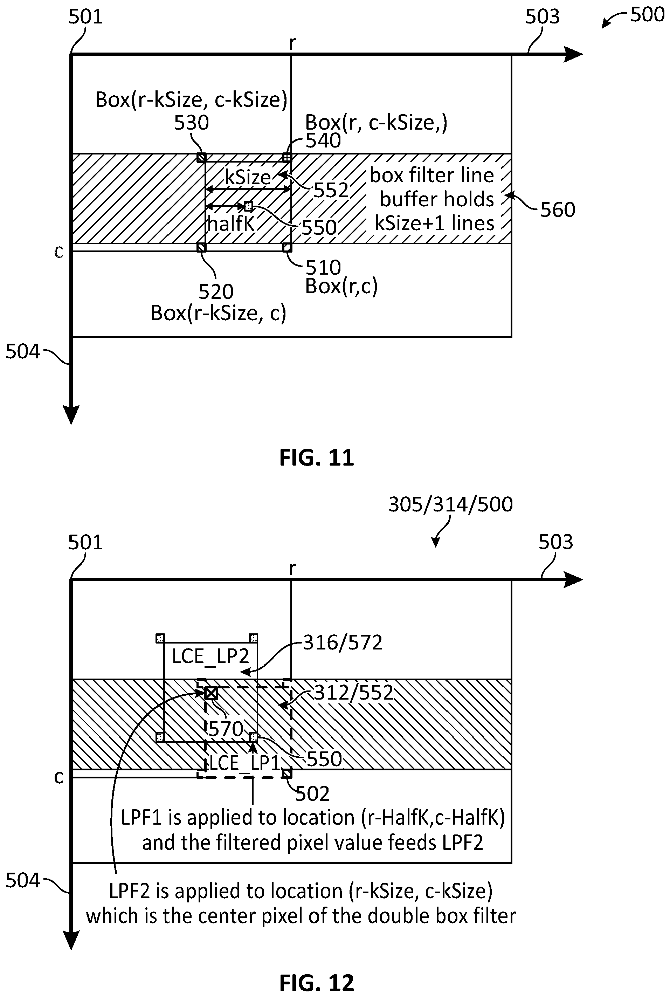

The implementation using box sums as discussed permits low pass filtering to be performed using efficient hardware resources. For example, to perform filtering at pixel 550 using kernel 552, logic device 110 may use boxes 512 and 532 and therefore may utilize a number of line buffers (e.g., in memory component 120) corresponding to kSize. For example, Fig. 11 illustrates a representation of such a buffer size 560 used for filtering pixel values in accordance with an embodiment of the present disclosure.

Moreover, filtering may be performed with a total of 5 x kSize line buffers (e.g., as opposed to kSize x kSize line buffers in other embodiments). In some embodiments, a total of 6 x kSize line buffers may be used for ease of repeatability when the same box filter is instantiated twice to provide blocks 312 and 316.

Returning to Fig. 4, in block 450, if additional pixels of image 500 remain to be filtered, then process 400 repeats blocks 420 to 440 to filter another pixel. After all desired pixels have been filtered, in block 460, logic device 110 provides a filtered image.

In this regard, when process 400 is performed in block 312 (e.g., the first low pass filter block), then it will operate on pixel values of original image 305 (e.g., image 500 will correspond to original image 305 in this iteration of process 400) and block 460 provides first low pass filtered image 314.

When process 400 is performed in block 316 (e.g., the second low pass filter block), then it will operate on pixel values of first low pass filtered image 314 (e.g., image 500 will correspond to first low pass filtered image 314 in this iteration of process 400) and block 460 provides second low pass filtered image 318.

For example, Fig. 12 illustrates a representation of stacked filters 312 and 316 used for filtering pixel values in accordance with an embodiment of the present disclosure. In this regard, filter 312 (having kernel 552) is applied to pixel 550 (r-HalfK,c-HalfK) of original image 305 to provide first low pass filtered image 314. Filter 316 (having kernel 572) is applied to pixel 570 (r-kSize,c-kSize) of first low pass filtered image 314 to provide second low pass filtered image 318.

Returning to Fig. 3, additional processing may be performed on local contrast enhanced image 330. For example, block 350 includes a sharpening stage and an equalization stage.

Regarding the sharpening stage, various sharpening filters may be used such as a bilateral filter, a guided filter, an unsharp mask, and/or others. In the embodiment described in Fig. 3, an unsharp mask filter is used. Accordingly, in block 352, logic device 110 applies a low pass filter to local contrast enhanced image 330 to provide a low pass filtered image 354 and a high pass filtered image 356. In some embodiments, block 352 may apply a low pass Gaussian filter having a smaller kernel (e.g., 5 by 5 pixels or other sizes) than either of low pass filter blocks 312 and 316. In some embodiments, high pass filtered image 356 may be provided by subtracting low pass filtered image 354 from local contrast enhanced image 330 (e.g., in a similar manner as discussed with regard to block 320).

In block 378, high pass filtered image 356 is amplified by a gain value 380 to provide an adjusted high pass filtered image 382. In this regard, gain value 380 may be adjusted to selectively increase or decrease the amount of detail (e.g., high pass filtered image features) provided to recombination block 388. In some embodiments, gain value 380 may also be limited by a maximum gain limit 376 (e.g., determined in block 358 further discussed herein).

Regarding the equalization stage, a global histogram equalization may be performed on low pass filtered image 354 in block 358 to provide an equalized image 362. For example, in some embodiments, histogram equalization may be performed in accordance with techniques provided by U.S. Patent No. 8,208,026 issued June 26, 2012.

In some embodiments, block 358 may use a bin width of 16 for performing histogram equalization. In some embodiments, pixel values in the bins of the histogram may be clipped using a linear percent value 360. In some embodiments, block 358 may include calculating and applying a gain value for a gamma correction operation applied to the pixel values.

In some embodiments, block 358 may include performing a second histogram equalization operation to aggregate an associated transfer function, limit bins of the histogram from being overstretched, and damping the transfer function. In some embodiments, block 358 may include determining and storing the maximum slope in the transfer function of the histogram equalization to determine maximum gain limit 376 applied in block 378.

In block 372, equalized image 362 is converted (e.g., downsampled) to a reduced image 374 having a reduced bit depth. For example, in some embodiments, equalized image 362 may have 14 bit or 16 bit pixel values and reduced image may have 8 bit pixel values.

In block 388, pixel values of adjusted high pass filtered image 382 and reduced image 374 are added together to provide an output image 390. Also in block 388, an adjustment value 384 may be added to selectively brighten or darken output image 390.
It will be appreciated that output image 390 will exhibit increased local contrast enhancement provided by block 310, increased global contrast enhancement provided by the histogram equalization provided by block 358, and improved detail provided by the sharpening stage as discussed.

Where applicable, various embodiments provided by the present disclosure can be implemented using hardware, software, or combinations of hardware and software. Also where applicable, the various hardware components and/or software components set forth herein can be combined into composite components comprising software, hardware, and/or both without departing from the present disclosure. Where applicable, the various hardware components and/or software components set forth herein can be separated into subcomponents comprising software, hardware, or both without departing from the present disclosure. **In** addition, where applicable, it is contemplated that software components can be implemented as hardware components, and vice-versa.

Software in accordance with the present disclosure, such as program code and/or data, can be stored on one or more computer readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

Embodiments described above illustrate but do not limit the invention. It should also be understood that numerous modifications and variations are possible in accordance with the principles of the present invention. Accordingly, the scope of the invention is defined only by the following claims.

## Claims

1. A method (400) comprising:
receiving an image (500) comprising a plurality of pixels having associated pixel values;
calculating (410) a plurality of sums of subsets of the pixel values, wherein each subset comprises the pixels of a box (512, 522, 532, 542) extending from an origin of the image to an associated one of the pixels (510, 520, 530, 540);
selecting (420) one (550) of the pixels to be filtered;
identifying (430) a kernel (552) of pixels associated with the selected pixel; and
low pass filtering (440) the pixel value associated with the selected pixel using the calculated sums.

2. The method of claim 1, wherein the low pass filtering comprises:
calculating a sum of the pixel values of the kernel by selectively adding and/or subtracting the calculated sums of the subsets; and
calculating an average of the sum of the pixel values of the kernel.

3. The method of claim 1, wherein the box (512, 522, 532, 542) is a right-angled parallelogram with opposite corners corresponding to an origin (501) of the image and the associated one (510, 520, 530, 540) of the pixels.

4. The method of claim 1, further comprising;
repeating (450) the selecting, the identifying, and the filtering for all of the pixels of the image to provide a first low pass filtered image (314);
repeating the previous operations using the first low pass filtered image to provide a second low pass filtered image (318); and
providing a local contrast enhanced image (330) using the second low pass filtered image.

5. The method of claim 4, wherein the first low pass filtered image is provided by a first moving average filter and the second low pass filtered image is provided by a second moving average filter in series with the first moving average filter.

6. The method of claim 4, wherein the providing comprises:
calculating a difference between the received image and the second low pass filtered image to provide a high pass filtered image (356);
selectively adjusting a gain (380) associated with the high pass filtered image; and
combining the gain adjusted high pass filtered image (382) with the second low pass filtered image to provide the local contrast enhanced image; or
wherein the method further comprises:
providing a histogram equalized image (362) using the local contrast enhanced image;
reducing a bit depth of the histogram equalized image; and
combining the reduced bit depth histogram equalized image with a high pass filtered local contrast enhanced image to provide a sharpened image (390).

7. The method of claim 1, wherein the image is a thermal image comprising 1024 pixels by 1280 pixels and the kernel comprises 64 pixels by 64 pixels.

8. A system (100) comprising:
a logic device (110) configured to:
receive an image (500) comprising a plurality of pixels having associated pixel values;
calculate (410) a plurality of sums of subsets of the pixel values, wherein each subset comprises the pixels of a box (512, 522, 532, 542) extending from an origin of the image to an associated one of the pixels (510, 520, 530, 540);
select (420) one (550) of the pixels to be filtered;
identify (430) a kernel (552) of pixels associated with the selected pixel; and
low pass filter (440) the pixel value associated with the selected pixel using the calculated sums.

9. The system of claim 8, wherein the low pass filter comprises:
a calculation of a sum of the pixel values of the kernel by selectively adding and/or subtracting the calculated sums of the subsets; and
a calculation of an average of the sum of the pixel values of the kernel.

10. The system of claim 8, wherein the box (512, 522, 532, 542) is a right-angled parallelogram with opposite corners corresponding to an origin (501) of the image and the associated one (510, 520, 530, 540) of the pixels.

11. The system of claim 8, wherein the logic device is configured to:
repeat (450) the select, the identify, and the filter operations for all of the pixels of the image to provide a first low pass filtered image (314);
repeat the previous operations using the first low pass filtered image to provide a second low pass filtered image (318); and
provide a local contrast enhanced image (330) using the second low pass filtered image.

12. The system of claim 11, wherein the first low pass filtered image is provided by a first moving average filter (312) implemented by the logic device and the second low pass filtered image is provided by a second moving average filter (316) implemented by the logic device in series with the first moving average filter.

13. The system of claim 11, wherein the logic device is configured to provide the local contrast enhanced image by performing:
a calculation of a difference between the received image and the second low pass filtered image to provide a high pass filtered image (356);
a selective adjustment of a gain (380) associated with the high pass filtered image; and
a combination of the gain adjusted high pass filtered image (382) with the second low pass filtered image to provide the local contrast enhanced image.

14. The system of claim 11, wherein the logic device is configured to:
provide a histogram equalized image (362) using the local contrast enhanced image;
reduce a bit depth of the histogram equalized image; and
combine the reduced bit depth histogram equalized image with a high pass filtered local contrast enhanced image to provide a sharpened image (390).

15. The system of claim 8, further comprising:
a thermal imager configured to capture the image;
wherein the image is a thermal image comprising 1024 pixels by 1280 pixels; and
wherein the kernel comprises 64 pixels by 64 pixels.

## Patentansprüche

1. Ein Verfahren (400), das Folgendes beinhaltet:
Empfangen eines Bildes (500), das eine Vielzahl von Pixeln mit assoziierten Pixelwerten beinhaltet;
Berechnen (410) einer Vielzahl von Summen von Teilmengen der Pixelwerte, wobei jede Teilmenge die Pixel einer Box (512, 522, 532, 542) beinhaltet, die sich von einem Ursprung des Bildes zu einem assoziierten einen der Pixel (510, 520, 530, 540) erstreckt;
Auswählen (420) eines (550) der zu filternden Pixel;
Identifizieren (430) eines Kernels (552) von Pixeln, der mit dem ausgewählten Pixel assoziiert ist; und
Tiefpassfiltern (440) des Pixelwerts, der mit dem ausgewählten Pixel assoziiert ist, unter Verwendung der berechneten Summen.

2. Verfahren gemäß Anspruch 1, wobei das Tiefpassfiltern Folgendes beinhaltet:
Berechnen einer Summe der Pixelwerte des Kernels durch selektives Addieren und/oder Subtrahieren der berechneten Summen der Teilmengen; und
Berechnen eines Mittelwerts der Summe der Pixelwerte des Kernels.

3. Verfahren gemäß Anspruch 1, wobei die Box (512, 522, 532, 542) ein rechtwinkliges Parallelogramm mit gegenüberliegenden Ecken ist, die einem Ursprung (501) des Bildes und dem assoziierten einen (510, 520, 530, 540) der Pixel entsprechen.

4. Verfahren gemäß Anspruch 1, das ferner Folgendes beinhaltet:
Wiederholen (450) des Auswählens, des Identifizierens und des Filterns für alle Pixel des Bildes, um ein erstes tiefpassgefiltertes Bild (314) bereitzustellen;
Wiederholen der vorhergehenden Operationen unter Verwendung des ersten tiefpassgefilterten Bildes, um ein zweites tiefpassgefiltertes Bild (318) bereitzustellen; und
Bereitstellen eines lokalen kontrastverstärkten Bildes (330) unter Verwendung des zweiten tiefpassgefilterten Bildes.

5. Verfahren gemäß Anspruch 4, wobei das erste tiefpassgefilterte Bild durch ein erstes Filter mit gleitendem Mittelwert bereitgestellt wird und das zweite tiefpassgefilterte Bild durch ein zweites Filter mit gleitendem Mittelwert bereitgestellt wird, das mit dem ersten Filter mit gleitendem Mittelwert in Reihe geschaltet ist.

6. Verfahren gemäß Anspruch 4, wobei das Bereitstellen Folgendes beinhaltet:
Berechnen einer Differenz zwischen dem empfangenen Bild und dem zweiten tiefpassgefilterten Bild, um ein hochpassgefiltertes Bild (356) bereitzustellen;
selektives Anpassen einer Verstärkung (380), die mit dem hochpassgefilterten Bild assoziiert ist; und
Kombinieren des verstärkungsangepassten hochpassgefilterten Bildes (382) mit dem zweiten tiefpassgefilterten Bild, um das lokale kontrastverstärkte Bild bereitzustellen; oder
wobei das Verfahren ferner Folgendes beinhaltet:
Bereitstellen eines histogrammausgeglichenen Bildes (362) unter Verwendung des lokalen kontrastverstärkten Bildes;
Reduzieren einer Bittiefe des histogrammausgeglichenen Bildes; und
Kombinieren des histogrammausgeglichenen Bildes mit reduzierter Bittiefe mit einem hochpassgefilterten lokalen kontrastverstärkten Bild, um ein geschärftes Bild (390) bereitzustellen.

7. Verfahren gemäß Anspruch 1, wobei das Bild ein Wärmebild ist, das 1024 Pixel mal 1280 Pixel beinhaltet, und der Kernel 64 Pixel mal 64 Pixel beinhaltet.

8. Ein System (100), das Folgendes beinhaltet:
eine Logikvorrichtung (110), die für Folgendes konfiguriert ist:
Empfangen eines Bildes (500), das eine Vielzahl von Pixeln mit assoziierten Pixelwerten beinhaltet;
Berechnen (410) einer Vielzahl von Summen von Teilmengen der Pixelwerte, wobei jede Teilmenge die Pixel einer Box (512, 522, 532, 542) beinhaltet, die sich von einem Ursprung des Bildes zu einem assoziierten einen der Pixel (510, 520, 530, 540) erstreckt;
Auswählen (420) eines (550) der zu filternden Pixel;
Identifizieren (430) eines Kernels (552) von Pixeln, der mit dem ausgewählten Pixel assoziiert ist; und
Tiefpassfiltern (440) des Pixelwerts, der mit dem ausgewählten Pixel assoziiert ist, unter Verwendung der berechneten Summen.

9. System gemäß Anspruch 8, wobei das Tiefpassfilter Folgendes beinhaltet:
eine Berechnung einer Summe der Pixelwerte des Kernels durch selektives Addieren und/oder Subtrahieren der berechneten Summen der Teilmengen; und
eine Berechnung eines Mittelwerts der Summe der Pixelwerte des Kernels.

10. System gemäß Anspruch 8, wobei die Box (512, 522, 532, 542) ein rechtwinkliges Parallelogramm mit gegenüberliegenden Ecken ist, die einem Ursprung (501) des Bildes und dem assoziierten einen (510, 520, 530, 540) der Pixel entsprechen.

11. System gemäß Anspruch 8, wobei die Logikvorrichtung für Folgendes konfiguriert ist:
Wiederholen (450) der Auswahl-, der Identifizierungs- und der Filteroperationen für alle Pixel des Bildes, um ein erstes tiefpassgefiltertes Bild (314) bereitzustellen;
Wiederholen der vorhergehenden Operationen unter Verwendung des ersten tiefpassgefilterten Bildes, um ein zweites tiefpassgefiltertes Bild (318) bereitzustellen; und
Bereitstellen eines lokalen kontrastverstärkten Bildes (330) unter Verwendung des zweiten tiefpassgefilterten Bildes.

12. System gemäß Anspruch 11, wobei das erste tiefpassgefilterte Bild durch ein erstes Filter (312) mit gleitendem Mittelwert bereitgestellt wird, das durch die Logikvorrichtung implementiert ist, und das zweite tiefpassgefilterte Bild durch ein zweites Filter (316) mit gleitendem Mittelwert bereitgestellt wird, das durch die Logikvorrichtung implementiert ist und mit dem ersten Filter mit gleitendem Mittelwert in Reihe geschaltet ist.

13. System gemäß Anspruch 11, wobei die Logikvorrichtung konfiguriert ist, um das lokale kontrastverstärkte Bild durch Durchführen von Folgendem bereitzustellen:
einer Berechnung einer Differenz zwischen dem empfangenen Bild und dem zweiten tiefpassgefilterten Bild, um ein hochpassgefiltertes Bild (356) bereitzustellen;
einer selektiven Anpassung einer Verstärkung (380), die mit dem hochpassgefilterten Bild assoziiert ist; und
einer Kombination des verstärkungsangepassten hochpassgefilterten Bildes (382) mit dem zweiten tiefpassgefilterten Bild, um das lokale kontrastverstärkte Bild bereitzustellen.

14. System gemäß Anspruch 11, wobei die Logikvorrichtung für Folgendes konfiguriert ist:
Bereitstellen eines histogrammausgeglichenen Bildes (362) unter Verwendung des lokalen kontrastverstärkten Bildes;
Reduzieren einer Bittiefe des histogrammausgeglichenen Bildes; und
Kombinieren des histogrammausgeglichenen Bildes mit reduzierter Bittiefe mit einem hochpassgefilterten lokalen kontrastverstärkten Bild, um ein geschärftes Bild (390) bereitzustellen.

15. System gemäß Anspruch 8, das ferner Folgendes beinhaltet:
einen Wärmebildgeber, der konfiguriert ist, um das Bild aufzunehmen;
wobei das Bild ein Wärmebild ist, das 1024 Pixel mal 1280 Pixel beinhaltet; und
wobei der Kernel 64 Pixel mal 64 Pixel beinhaltet.

## Revendications

1. Un procédé (400) comprenant :
la réception d'une image (500) comprenant une pluralité de pixels ayant des valeurs de pixels associées ;
le calcul (410) d'une pluralité de sommes de sous-ensembles des valeurs de pixels,
dans lequel chaque sous-ensemble comprend les pixels d'une boîte (512, 522, 532, 542) s'étendant d'une origine de l'image à un pixel associé parmi les pixels (510, 520, 530, 540) ;
la sélection (420) de l'un (550) des pixels à filtrer ;
l'identification (430) d'un noyau (552) de pixels associés au pixel sélectionné ; et
le filtrage passe-bas (440) de la valeur de pixel associée au pixel sélectionné à l'aide des sommes calculées.

2. Le procédé de la revendication 1, dans lequel le filtrage passe-bas comprend :
le calcul d'une somme des valeurs de pixels du noyau par addition et/ou soustraction sélective des sommes calculées des sous-ensembles ; et
le calcul d'une moyenne de la somme des valeurs de pixels du noyau.

3. Le procédé de la revendication 1, dans lequel la boîte (512, 522, 532, 542) est un parallélogramme rectangle avec des sommets opposés correspondant à une origine (501) de l'image et au pixel associé (510, 520, 530, 540) parmi les pixels.

4. Le procédé de la revendication 1, comprenant en outre :
la répétition (450) de la sélection, de l'identification et du filtrage pour tous les pixels de l'image pour fournir une première image filtrée passe-bas (314) ;
la répétition des opérations précédentes à l'aide de la première image filtrée passe-bas pour fournir une deuxième image filtrée passe-bas (318) ; et
la fourniture d'une image à contraste local amélioré (330) à l'aide de la deuxième image filtrée passe-bas.

5. Le procédé de la revendication 4, dans lequel la première image filtrée passe-bas est fournie par un premier filtre à moyenne mobile et la deuxième image filtrée passe-bas est fournie par un deuxième filtre à moyenne mobile en série avec le premier filtre à moyenne mobile.

6. Le procédé de la revendication 4, dans lequel la fourniture comprend :
le calcul d'une différence entre l'image reçue et la deuxième image filtrée passe-bas pour fournir une image filtrée passe-haut (356) ;
l'ajustement sélectif d'un gain (380) associé à l'image filtrée passe-haut ; et
la combinaison de l'image filtrée passe-haut à gain ajusté (382) avec la deuxième image filtrée passe-bas pour fournir l'image à contraste local amélioré ; ou
dans lequel le procédé comprend en outre :
la fourniture d'une image à histogramme égalisé (362) à l'aide de l'image à contraste local amélioré ;
la réduction d'une profondeur de bit de l'image à histogramme égalisé ; et
la combinaison de l'image à histogramme égalisé à profondeur de bit réduite avec une image à contraste local amélioré filtrée passe-haut pour fournir une image affinée (390).

7. Le procédé de la revendication 1, dans lequel l'image est une image thermique comprenant 1024 pixels par 1280 pixels et le noyau comprend 64 pixels par 64 pixels.

8. Un système (100) comprenant :
un dispositif logique (110) configuré pour :
recevoir une image (500) comprenant une pluralité de pixels ayant des valeurs de pixels associées ;
calculer (410) une pluralité de sommes de sous-ensembles des valeurs de pixels,
dans lequel chaque sous-ensemble comprend les pixels d'une boîte (512, 522, 532, 542) s'étendant d'une origine de l'image à un pixel associé parmi les pixels (510, 520, 530, 540) ;
sélectionner (420) l'un (550) des pixels à filtrer ;
identifier (430) un noyau (552) de pixels associés au pixel sélectionné ; et
filtrer en passe-bas (440) la valeur de pixel associée au pixel sélectionné à l'aide des sommes calculées.

9. Le système de la revendication 8, dans lequel le filtre passe-bas comprend :
un calcul d'une somme des valeurs de pixels du noyau par addition et/ou soustraction sélective des sommes calculées des sous-ensembles ; et
un calcul d'une moyenne de la somme des valeurs de pixels du noyau.

10. Le système de la revendication 8, dans lequel la boîte (512, 522, 532, 542) est un parallélogramme rectangle avec des sommets opposés correspondant à une origine (501) de l'image et au pixel associé (510, 520, 530, 540) parmi les pixels.

11. Le système de la revendication 8, dans lequel le dispositif logique est configuré pour :
répéter (450) les opérations de sélection, d'identification et de filtrage pour tous les pixels de l'image pour fournir une première image filtrée passe-bas (314) ;
répéter les opérations précédentes à l'aide de la première image filtrée passe-bas pour fournir une deuxième image filtrée passe-bas (318) ; et
fournir une image à contraste local amélioré (330) à l'aide de la deuxième image filtrée passe-bas.

12. Le système de la revendication 11, dans lequel la première image filtrée passe-bas est fournie par un premier filtre à moyenne mobile (312) mis en œuvre par le dispositif logique et la deuxième image filtrée passe-bas est fournie par un deuxième filtre à moyenne mobile (316) mis en œuvre par le dispositif logique en série avec le premier filtre à moyenne mobile.

13. Le système de la revendication 11, dans lequel le dispositif logique est configuré pour fournir l'image à contraste local amélioré en effectuant :
un calcul d'une différence entre l'image reçue et la deuxième image filtrée passe-bas pour fournir une image filtrée passe-haut (356) ;
un ajustement sélectif d'un gain (380) associé à l'image filtrée passe-haut ; et
une combinaison de l'image filtrée passe-haut à gain ajusté (382) avec la deuxième image filtrée passe-bas pour fournir l'image à contraste local amélioré.

14. Le système de la revendication 11, dans lequel le dispositif logique est configuré pour :
fournir une image à histogramme égalisé (362) à l'aide de l'image à contraste local amélioré ;
réduire une profondeur de bit de l'image à histogramme égalisé ; et
combiner l'image à histogramme égalisé à profondeur de bit réduite avec une image à contraste local amélioré filtrée passe-haut pour fournir une image affinée (390).

15. Le système de la revendication 8, comprenant en outre :
un imageur thermique configuré pour capturer l'image ;
dans lequel l'image est une image thermique comprenant 1024 pixels par 1280 pixels ; et
dans lequel le noyau comprend 64 pixels par 64 pixels.
